# EUROPEAN PATENT APPLICATION

(11) **EP 3 179 715 A1**
(43) Date of publication of application: **14.06.2017**
(21) Application number: 16207249.0
(22) Date of filing: 14.02.2008
(51) Int. Cl.: H04N 7/08, H04H 20/91, H04H 60/82, H04N 7/24, H04N 21/435, H04N 21/235, G06F 9/445

(54) **METHOD FOR PROCESSING DIGITAL BROADCASTING DATA APPLICATION AND COMPUTER-READABLE MEDIUM HAVING THEREON PROGRAM PERFORMING FUNCTION EMBODYING THE SAME**

(30) Priority: 14.02.2007 KR 20070015382
(62) Divisional of application: 08712508.4
(71) Applicant: SK Planet Co., Ltd., Seoul 100-999 (KR)
(72) Inventor: KIM, John, 152-720 Seoul (KR); BAEK, Won Jang, 463-731 Gyeonggi-do (KR); LEE, Seong Baek, 158-757 Seoul (KR)
(74) Representative: Maikowski & Ninnemann Patentanwälte Partnerschaft mbB

(57) **Abstract**

A receiver for executing a data application, the receiver comprising a processor configured to obtain metadata of the data application, wherein the metadata includes download location information and time information for executing the data application which include at least one resource divided into at least one segment, request a segment included in the at least one resource based on the metadata and receive the segment in response to the request.

## Description

### [Technical Field]

The present invention relates to a method for processing a digital broadcasting data application and a computer-readable medium having thereon a program performing a function embodying the same, and more particularly to a method for processing a digital broadcasting data application and a computer-readable medium having thereon a program performing a function embodying the same wherein a data of a minimum quantity required for executing a data application is received and other data is received by a pull method to minimize a time required for receiving and executing the data application.

### [Background Art]

An environment of a broadcasting is changing as a technology progresses and a demand of a viewer changes. Recently, an analog broadcasting is switched to a digital broadcasting, and a broadcast medium is diversified from a terrestrial broadcasting to a cable broadcasting, a satellite broadcasting, an IP-TV service using a high speed communication network, a terrestrial DMB and a satellite DMB.

The digital broadcasting is capable of providing additional services in various filed such as sports, movies, home shoppings and musics because a capacity thereof is four to eight times that of the analog broadcasting. A wide variety of choices for the viewer is also provided since various types of the broadcasting such as the cable broadcasting, the satellite broadcasting, a DMB (Digital Multimedia Broadcasting) and the IP-TV service.

Specifically, a single broadcasting channel has a bandwidth of 6, 7 or 8 MHz. In the analog broadcasting a broadcast program signal, i.e. an analog video signal and an audio signal is transmitted via a carrier signal having the bandwidth of 6, 7 or 8 MHz. therefore, only one broadcast program signal is transmitted via the single broadcasting channel.

However, in the digital broadcasting, the analog video signal and the audio signal are converted to a digital video data and a digital audio data, and the digital video data and the digital audio data are compressed according to an MPEG technology to be transmitted as the broadcast program signal. Therefore, a plurality of broadcast program signals may be multiplexed in the single broadcasting channel to form a plurality of virtual broadcasting channels.

Accordingly, the digital broadcasting is capable of a multi-channel broadcasting by transmitting the plurality of broadcast program signals wherein the digital video data and the digital audio data are multiplexed into the single broadcasting channel contrary to the analog broadcasting wherein only one broadcast program signal is transmitted via the single broadcasting channel.

The digital broadcasting supports multiple resolutions including a HDTV (High Definition Television) supporting an aspect ratio of 16:9 and a high resolution of 1920x1080 or 1280x720, and a SDTV (Standard Definition Television) supporting an aspect ratio of 16:9 or 4:3 and a resolution of 740x480 or 640x480.

Due to the high resolution of the HDTV, a size of the digital video data is large. As a result, only one broadcast program signal may be transmitted per broadcasting channel. In case of the SDTV, four or five broadcast program signals may be transmitted per broadcasting channel since the size of the digital video data is small, thereby allowing the multi-channel broadcasting.

That is, while only one broadcasting is possible per broadcasting channel in the conventional analog broadcasting, multiple broadcastings are transmitted per broadcasting channel for the multi-channel broadcasting by the compression and the multiplexing of the digital data and the viewer selects the broadcasting from the multiple broadcastings.

Addition to the transmission of the conventional broadcast program signal, various data may be broadcasted and an interactivity may be embodied by associating with the communication network in the digital broadcasting environment. The data broadcasting, various data services using the interactivity in particular, is expected to play a major role in propagating the digital broadcasting in view of an easy use by the viewer.

The terrestrial digital broadcasting was initiated in October, 2001 and the satellite digital broadcasting was initiated in March, 2002 in Korea. The cable digital broadcasting and the IP-TV service are also spreading among cable broadcasters and internet service providers. The terrestrial data broadcasting and the satellite data broadcasting were initiated in June, 2002 in Korea. The digital broadcasting for a mobile reception such as a satellite DMB and a terrestrial DMB is also spreading.

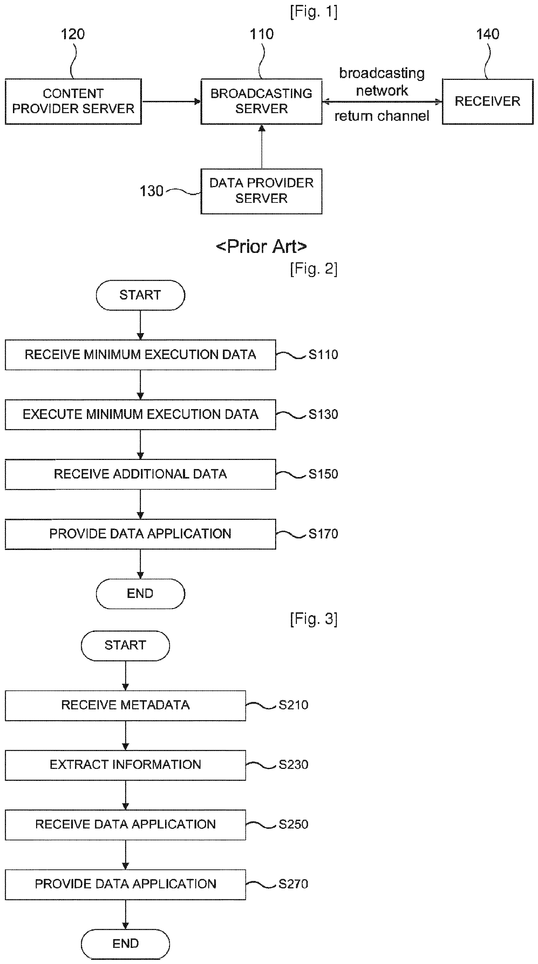

Fig. 1 is a block diagram exemplifying a conventional data broadcast system in a digital broadcast.

As shown, the conventional data broadcast system comprises a broadcasting server 110, a content provider server 120, a data provider server 130 and a receiver 140.

The content provider server 120 provides a broadcast content, i.e. the conventional broadcast program to the broadcasting server 110.

The data provider server 130 provides a content for a data broadcasting, i.e. a data content to the broadcasting server 110.

The broadcasting server 110 receives the broadcast content and the data content from the content provider server 120 and the data provider server 130, respectively, multiplexes and converts the same into various broadcasting specification such as ATSC to be transmitted to the receiver 140 through a broadcast network. The broadcast network includes various networks such as a terrestrial broadcast network, a cable broadcast network, a satellite broadcast network, a high speed communication network of the IP-TV service and a DMB network.

In addition, the broadcasting server 110 may receive a feedback signal transmitted from the receiver 140 through a return channel and transmits the feedback signal to the content provider server 120 or the data provider server 130 for the content provider server 120 or the data provider server 130 to carry out a corresponding process. The receiver 140 may also transmit the feedback signal to the content provider server 120 or the data provider server 130 through the return channel.

The return channel refers to a mean for transmitting a feedback of a viewer to the broadcasting server 110, the content provider server 120 or the data provider server 130 and is not limited in a communication method or a communication format. Preferably, the return channel is embodied by a bidirectional communication network.

The receiver 140 receives the broadcast content and the data content from the broadcasting server 110 and provides the contents to the viewer via a signal processing such as an appropriate decoding. For instance, the receiver 140 may be a digital TV or a set-top box in compliance with the terrestrial broadcasting specification such as the ATSC and interactive data broadcasting specification such as DASE in case of the terrestrial digital broadcasting. The receiver 140 may be a set-top box supporting the broadcasting specification such as OpenCable and DVB and a data broadcasting specification suitable for the broadcasting network such as OCAP and MHP in case of the cable broadcasting or the satellite broadcasting. The receiver 140 may be a set-top box or a mobile communication terminal supporting a corresponding data broadcasting specification in case of the IP-TV or the DMB.

The data content is generally transmitted in a carousel format such as a DSM-CC data/object carousel. Since a processing capacity or a storage capacity of the receiver 140 is limited, it is virtually impossible for the receiver 140 to store and execute an entirety of the data content therein. Therefore, the receiver 140 receives the data content transmitted periodically through the broadcasting network and provides the data content as the data broadcasting.

The data application may be configured to display a text data based on a font and may include a control element such as a widget and an image. For instance, the data application may include a button or an icon for selecting a desired data.

The data application is transmitted within a digital broadcast signal. The receiver 140 receives and processes the data application. The receiver 140 transmits the processed data application to a display apparatus (not shown). The display apparatus displays the received data application.

In embodying the data broadcasting, a method wherein the data application itself is transmitted within the digital broadcast signal, and a resource required for executing the data application is transmitted through the return channel may be employed. That is, the resource such as an image data may be received by a communication with an apparatus for storing the resource such as the data provider server 130.

Currently, in the IP-TV service for instance, the data application is transmitted via an IP multicast method. Therefore, an excessive time is required for the data application to load after the viewer selects a data broadcasting channel.

The broadcasting server 110 transmits the data application by dividing the data application into packets similar to a transmission of a broadcasting packet. The receiver 140 receives the packets and combines the packets into the data application. Particularly, a transmission speed of the data application in the IP multicast method is lower than that of a unicast method. In addition, the packets may be lost during the transmission so that the data application cannot be executed.

A video data of a digital broadcast program may be reproduced even when a portion of packets is lost by ignoring the lost packets and using other packets. However, the data application cannot be executed when a portion of the packets thereof is lost. Therefore, the receiver 140 should re-receive an entirety of the data application when an error occurs.

In addition, even after the receiver 140 receives the packets of the data application, the receiver should combine the received packets according to an order thereof. Therefore, a time for combining the packets is additionally required when the data application is executed.

Moreover, even after the packets are combined, the receiver 140 cannot load the data application in a divided fashion but load and execute the entirety of the data application. Therefore, an execution speed is degraded and the resource of the receiver 140 is excessively used.

Further more, even when the receiver 140 receives the resource separately from the data application through the return channel, the receiver 140 should receive the resource via a HTTP communication. Therefore, the receiving speed is degraded.

Due to the above-described drawbacks, 10 to 30 seconds of time is consumed for the receiver 140 to receive and provide the data application to the viewer. Therefore, the conventional method is disadvantageous in that an excessive time is required for the reception and the execution of the data application.

### [Disclosure]

### [Technical Problem]

It is an object of the present invention to provide a method for processing a digital broadcasting data application wherein a data of minimum quantity required for executing a data application is received and other data is received by a pull method to minimize a time required for receiving and executing the data application.

It is another object of the present invention to provide a computer-readable medium having thereon a program performing a function embodying the method of the present invention.

### [Technical Solution]

The subject-matter of the independent claim is presented. Features of embodiments are also defined in the dependent claims.

For example, in order to achieve above-described object of the present invention, there is provided a method for executing a data application of a digital broadcasting, the method comprising steps of: (a) receiving a minimum execution data for executing the data application through a digital broadcast network; (b) executing the minimum execution data; (c) receiving an additional data required during the execution of the minimum execution data; and (d) combining the minimum execution data and the additional data to provide the data application.

Preferably, the minimum execution data includes a foundation class data required for executing the data application.

Preferably, the additional data comprises an additional class data or a resource data required for executing the data application.

Preferably, the minimum execution data comprises a metadata for an execution of the data application, and the metadata comprises a download location information of the additional data or an execution condition information of the data application.

Preferably, the step (b) comprises (b-1) extracting the download location information of the additional data or the execution condition information of the data application from the metadata.

Preferably, the step (b) comprises (b-2) dividing the data application into scenes based on the minimum execution data, the step (c) comprises (c-1) receiving the additional data for each of the scenes, and the step (d) comprises (d-1) executing the additional data for each of the scenes to provide the data application.

Preferably, the step (c) comprises (c-2) receiving the additional data via a return channel.

Preferably, the step (c-2) comprises (c-3) receiving the additional data by carrying out a socket-based communication.

There is also provided a method for executing a data application of a digital broadcasting, the method comprising steps of: (a) receiving a metadata for the data application; (b) analyzing the metadata to extract an information required for executing the data application; (c) receiving the data application based on the information extracted in the step (b); and (d) executing and providing the data application.

Preferably, the step (a) comprises (a-1) receiving the metadata via a digital broadcast network.

Preferably, the metadata comprises a download location information of the data application or an execution condition information of the data application.

Preferably, the step (b) comprises (b-1) extracting the location information of the data application or the execution condition information of the data application from the metadata.

Preferably, the step (c) comprises (c-1) receiving the additional data via a return channel.

Preferably, the step (c-1) comprises (c-2) receiving the additional data by carrying out a socket-based communication.

Preferably, the data application comprises a plurality of divided data applications divided based on a resource, and the step (d) comprises (d-1) executing the plurality of divided data applications based on the resource.

### [Advantageous Effects]

In accordance with the present invention, a data of a minimum quantity required for executing a data application is received and other data is received by a pull method to minimize a time required for receiving and executing the data application.

### [Description of Drawings]

Fig. 1 is a block diagram exemplifying a conventional data broadcast system of a digital broadcast.
Fig. 2 is a flow diagram exemplifying a method for executing a data application of a digital broadcasting in accordance with a first embodiment of the present invention.
Fig. 3 is a flow diagram exemplifying a method for executing a data application of a digital broadcasting in accordance with a second embodiment of the present invention.

### [Description of the reference numerals]

| | | | |
|---|---|---|---|
| 110: | broadcasting server | 120: | content provider server |
| 130: | data provider server | 140: | receiver |

### [Best Mode]

The present invention will now be described in detail with reference to the accompanied drawings.

Fig. 2 is a flow diagram exemplifying a method for executing a data application in accordance with a first embodiment of the present invention.

The method for executing the data application of the digital broadcasting in accordance with the first embodiment of the present invention is embodied in a receiver of the digital broadcast. For instance, the method is embodied in a set-top box of a terrestrial broadcasting, a cable broadcasting or a satellite broadcasting, a television, a personal computer or a DMB receiver capable of receiving the terrestrial broadcasting, the cable broadcasting or the satellite broadcasting.

Referring to Fig. 2, the receiver receives a minimum execution data for executing the data application through a digital broadcast network (S110).

A conventional receiver receives an entirety of a data of the data application via the digital broadcast network. Particularly, an entirety of a class and a resource constituting the data application is received. Therefore, an excessive time is required to receive the data application. Accordingly, a large amount of delay occurs in executing the data application due to the excessive reception time.

Contrarily, the receiver in accordance with the present invention receives the minimum execution data instead of the entirety of the data of the data application. A remaining data may be received via a return channel. When the return channel is used instead of the digital broadcast network, the remaining data may be received faster. As a result, the time required for receiving the data application is minimized.

The digital broadcast network in the step S110 refers to various broadcast network such as a terrestrial broadcast network, a cable broadcast network, a satellite broadcast network, a high speed communication network of the IP-TV and a DMB network. In addition, the reception of the minimum execution data may be carried out by receiving the minimum execution data in a broadcast format, a multicast format or unicast format via the digital broadcast network.

The minimum execution data may include a foundation class data required for executing the data application. The minimum execution data is a data configured for a minimum execution of the data application.

The remaining data constituting the data application is referred to as "an additional data" hereinafter, wherein the additional data may include an additional class data or a resource data required for executing the data application.

The minimum execution data may comprise a metadata for the execution of the data application. That is, the metadata may comprise a download location information of the additional data or an execution condition information of the data application in order to facilitate a downloading of the additional data.

The receiver may minimize the time required to receive the data application via the digital broadcast network via the step S110.

Thereafter, the received minimum execution data is executed (S130). That is, the receiver executes the minimum execution data using an information processing apparatus such as a CPU.

In addition, when the minimum execution data includes the metadata, the download location information of the additional data or the execution condition information of the data application may be extracted from the metadata.

Thereafter, the receiver receives an additional data required during the execution of the minimum execution data in the step S130.

As described above, the minimum execution data is the minimum data required in executing the data application. Therefore, the receiver requires the additional data such as an additional resource, text or a class data in order to provide the data application wherein the additional data is received via the return channel embodied in a receiving stage of the digital broadcasting.

The receiver may receive the additional data by a conventional HTTP request. However, in order to minimize the reception time, it is preferable that the receiver receives the additional data by generating a socket. That is, the receiver may receive the additional data through an asynchronous socket-based communication with an data application providing server.

Thereafter, the minimum execution data and the addition data is combined to provide the data application (S170).

In accordance with the first embodiment of the present invention, the time required for providing the data application is minimized compared to the conventional receiver wherein the data application is received and executed via the digital broadcast network.

On the other hand, in order to further reduce the time required for executing the data application, a method described below may be used.

The conventional receiver receives an entirety of the data application and executes the data application as a whole. Therefore, a resource of the receiver such as a memory is excessively used.

In order to overcome the above-described problem, the receiver in accordance with the present invention divides the data application into scenes based on the minimum execution data and the data application is executed based on the scenes.

That is, in the step S130, the data application is divided into scenes based on the minimum execution data. The data application may be divided with respect to the resource. For instance, the data application may be divided into an image portion and a text portion.

Thereafter, when the additional data is received in the step S150, the additional data may be received for each of the scenes.

Thereafter, the additional data for each of the scenes may be executed to provide the data application.

For instance, since the time required for receiving a text data is less than that of an image data, the scene corresponding to the text data may be immediately executed and provided once the reception of the text data is complete. The scene corresponding to the image data is provided by executing the image data when the reception of the image data is complete.

As a result, the time required for providing the data application may be minimized.

### [Mode for Invention]

In accordance with the first embodiment, the data application is executed based on the minimum execution data. A metadata may be received and analyzed instead of the minimum execution data to provide the data application.

Fig. 3 is a flow diagram exemplifying a method for executing a data application in accordance with a second embodiment of the present invention.

Referring to Fig. 3, a receiver embodying the method for executing the data application in accordance with second embodiment receives a metadata for the data application (S210).

The second embodiment differs from the first embodiment in the following. In accordance with first embodiment, the receiver receives the minimum execution data such as the foundation class data of the data application. In accordance with second embodiment, the receiver receives only the metadata in the step S210. that is, the data application is not transmitted via the digital broadcast network but only the metadata is transmitted.

In addition, the receiver may receive the metadata via other methods as well as the digital broadcast network. For instance, the receiver may receive the metadata through the return channel. However, it is preferable that the receiver receives the metadata via the digital broadcast network.

The metadata may comprise a download location information of the data application or an execution condition information of the data application.

That is, the download location information of the data application may include a network connection location information of an data application providing server that may be connected via the return channel. The execution condition information of the data application may include an information on an association or an execution time of a particular broadcast program.

Thereafter, the metadata received in the step S210 is analyzed to extract an information required for executing the data application (S230).

The information required for executing the data application may include the download location information of the data application or the execution condition information of the data application.

Thereafter, the data application is received based on the information extracted in the step S230 (S250).

In the step S250, the receiver may receive the data application by establishing a connection to the data application providing server through the return channel.

In addition, it is preferable that the additional data is received by generating a socket in order to minimize a receiving time. That is, the receiver may receive the additional data through an asynchronous socket-based communication with the data application providing server.

Thereafter, the data application received in the step S250 is executed and provided (S270).

In accordance with the second embodiment of the present invention, only the metadata is received through the digital broadcast network and the data application is received through the return channel providing a high speed connection in order to minimize the time required for receiving the data application.

On the other hand, a method described below may be employed in order to reduce the time required to receive the data application.

The conventional receiver is disadvantageous in that the entirety of the data application is received and executed, resulting in an excessive use of the resource such as the memory of the receiver.

In order to overcome the disadvantage of the conventional receiver, the data application providing server may divide and store the data application for each of the resources. That is, the data application may be divided into a divided data application for a text resource, a divided data application for an image resource and a divided data application for controlling the resources.

Therefore, the receiver may receive the plurality of divided data applications in the step S250, and the receiver executes and provides the divided data application in the step S270. As a result, the execution time of the data application is minimized.

In addition, the present invention provides a computer-readable medium having thereon a program performing the steps of the method in accordance with the present invention.

The computer-readable medium refers to various storage mediums for storing a data in a code or a program format that may be read by a computer system. The computer-readable medium may include a memory such as a ROM and a RAM, a storage medium such as CD-ROM and a DVD-ROM, a magnetic storage medium such as a magnetic tape and a floppy disk, and an optical data storage medium. The computer-readable medium may include a data transferred via the Internet. The computer-readable medium may be embodied by a computer-readable data divided and stored over computer systems connected through a network.

Since the computer-readable medium in accordance with the present invention is substantially identical to that of the method in accordance with the present invention described with reference to Figs. 2 and 3, a detailed description thereof is omitted.

While the present invention has been particularly shown and described with reference to the preferred embodiment thereof, it will be understood by those skilled in the art that various changes in form and details may be effected therein without departing from the spirit and scope of the invention as defined by the appended claims.

### [Industrial Applicability]

In accordance with the present invention, the data of the minimum quantity required for executing the data application is received and other data is received by the pull method to minimize the time required for receiving and executing the data application. Particularly, the data application may be divided and executed for each of the scenes to minimize the time required for receiving and executing the data application.

## Claims

1. A receiver for executing a data application, the receiver comprising:
a processor configured to:
obtain metadata of the data application, wherein the metadata includes location information and time information for executing the data application which include at least one resource divided into at least one segment,
request a segment included in the at least one resource based on the metadata and
receive the segment in response to the request.

2. The receiver of claim 1, wherein a type of the at least one resource includes image, text and video required for executing the data application.

3. The receiver of claim 1, wherein the resource includes at least one data which is different encoded versions of additional data included in the data application.

4. The receiver of claim 1, wherein the processor transmit a http request specifying the segment.

5. The receiver of claim 1, wherein the processor executes the received segment.
